# EUROPÄISCHE PATENTSCHRIFT

(11) **EP 3 034 415 B1**
(45) Veröffentlichungstag und Bekanntmachung des Hinweises auf die Patenterteilung: **22.03.2017**
(21) Anmeldenummer: 14199112.5
(22) Anmeldetag: 19.12.2014
(51) Int. Cl.: B65B 5/06, B65B 35/40, B65B 43/52, B65B 59/00, B65B 65/00, B65B 35/20, B65B 43/48, B65B 65/02, B65G 54/02

(54) **Verfahren zum Übertragen von Packgut in Behältnisse und zum Weitertransport der befüllten Behältnisse**
Method for transferring articles to be packaged to containers and further transport of the filled containers
Procédé de transfert de produit d'emballage dans des récipients et de transport des récipients remplis

(43) Veröffentlichungstag der Anmeldung: 22.06.2016
(73) Patentinhaber: UHLMANN PAC-SYSTEME GmbH & Co. KG, 88471 Laupheim (DE)
(72) Erfinder: Aumann, Thomas, 88451 Dettingen (DE); Zieher, Daniel, 88444 Ummendorf (DE); Rodi, Wolfgang, 88471 Laupheim / Baustetten (DE); Fochler, Fritz, 89358 Kammeltal-Behlingen (DE); Wegerer, Mathias, 88453 Erolzheim-Edelbeuren (DE); Riekenbrauck, Jörg, 88477 Schwendi (DE); Haaga, Jürgen, 89616 Rottenacker (DE)
(74) Vertreter: Wächter, Jochen

(56) Entgegenhaltungen:
- EP-A1- 1 530 541
- DE-A1- 4 100 769
- DE-A1- 10 123 220
- DE-A1- 19 860 577
- DE-A1-102005 017 961
- US-A1- 2013 326 997

## Beschreibung

Die vorliegende Erfindung betrifft ein Verfahren zum Übertragen von Packgut, insbesondere Blisterpackungen, in Behältnisse, insbesondere Faltschachteln, und zum Weitertransport der befüllten Behältnisse.

In der pharmazeutischen Industrie werden zur Aufbewahrung von Medikamenten häufig versiegelte Blisterpackungen verwendet, die eine Vielzahl von Näpfen enthalten, in welche die pharmazeutischen Produkte, wie etwa Dragees oder Tabletten, eingebracht sind. Diese Blisterpackungen werden üblicherweise nach ihrer Herstellung beim weiteren Verpackungsprozess einer Verpackungsstation zugeführt, in der die Blisterpackungen einzeln oder als Blisterpackungsstapel in Faltschachteln eingebracht werden.

Um die Blisterpackungen in die Faltschachteln einzubringen, werden die Blisterpackungen mit Hilfe einer Transportvorrichtung entlang einer ersten Bewegungsbahn transportiert, während die Faltschachteln mithilfe einer Fördervorrichtung, die entsprechende Aufnahmen für die Faltschachteln umfasst, entlang einer zweiten Bewegungsbahn parallel zur ersten Bewegungsbahn transportiert werden. Die ersten und zweiten Bewegungsbahnen sind so aufeinander abgestimmt, dass die Blisterpackungen oder Blisterpackungsstapel zumindest zeitweise neben einer offenen Seite der zugeordneten Faltschachtel angeordnet sind. Dort werden die Blisterpackungen seitlich in die jeweilige Faltschachtel eingeschoben. Anschließend wird die Faltschachtel mit den darin enthaltenen Blisterpackungen auf der Fördervorrichtung der Faltschachteln weiterbewegt. Während des Einschubs der Blisterpackungen in die Faltschachteln stehen die Transportvorrichtung und die Fördervorrichtung entweder still oder werden beide mit derselben Geschwindigkeit nebeneinander bewegt.

Darüber hinaus sind Transportvorrichtungen bekannt, bei denen Schlitten entlang einer Laufschiene unabhängig voneinander bewegt werden. Dies wird realisiert, indem die Laufschiene eine Linearmotor-Antriebsvorrichtung zum Antrieb der Schlitten aufweist, wobei jeder Schlitten mindestens einen Permanentmagneten aufweist, der mit der Linearmotor-Antriebsvorrichtung in Wirkverbindung steht. Eine derartige Transportvorrichtung mit Linearmotorantrieb ist beispielsweise aus WO 2013/156177 A1 bekannt.

Es ist die Aufgabe der vorliegenden Erfindung, ein Verfahren zum Übertragen von Packgut in Behältnisse und zum Weitertransport der befüllten Behältnisse vorzuschlagen, das besonders platz- und kostensparend ist.

Diese Aufgabe wird durch die Merkmale des Anspruchs 1 gelöst.

Erfindungsgemäß wird ein Verfahren zum Übertragen von Packgut, insbesondere Blisterpackungen, in Behältnisse, insbesondere Faltschachteln, und zum Weitertransport der befüllten Behältnisse vorgeschlagen, das folgende Schritte aufweist:
Bereitstellen einer Transportvorrichtung mit mindestens zwei Schlitten, einer Laufschiene, entlang der die mindestens zwei Schlitten bewegbar sind, und einer Linearmotor-Antriebsvorrichtung zum Antrieb der mindestens zwei Schlitten, wobei die mindestens zwei Schlitten jeweils mindestens einen Permanentmagneten aufweisen, der mit der Linearmotor-Antriebsvorrichtung in Wirkverbindung steht;
Fördern von Packgut mit der Transportvorrichtung in einer Förderrichtung zu mindestens einer Übertragungsposition;
Bewegen des Packguts von der Transportvorrichtung in mindestens einen Zwischenablagebereich, der neben der Transportvorrichtung angeordnet ist;
Fördern von mindestens einem Behältnis mit der Transportvorrichtung zu der mindestens einen Übertragungsposition;
Zurückbewegen des Packguts von dem mindestens einen Zwischenablagebereich zur Transportvorrichtung, dabei Befüllen des mindestens einen Behältnisses mit Packgut; und
Weitertransportieren des mit Packgut befüllten mindestens einen Behältnisses mit der Transportvorrichtung in der Förderrichtung.

Bei diesem Verfahren erfolgt das Antransportieren von Packgut, des mindestens einen Behältnisses, und das Weitertransportieren der befüllten Behältnisse mit ein und derselben Transportvorrichtung. Damit kann auf eine separate Fördervorrichtung zum Weitertransport der befüllten Behältnisse oder zum Zuführen von leeren Behältnissen verzichtet werden. Neben dem verringerten Platzbedarf wirkt sich dies auch kostensenkend aus.

Vorzugsweise werden das Packgut und das mindestens eine Behältnis in mindestens einem ersten und einem zweiten Produktaufnahmeraum der Transportvorrichtung transportiert. Demnach ist für das Packgut und für das mindestens eine Behältnis ein jeweils auf die Form und Größe von Packgut bzw. Behältnis anpassbarer Produktaufnahmeraum vorgesehen und es ergibt sich keine Veranlassung für Anpassungen im laufenden Betrieb.

Des Weiteren ist es von Vorteil, wenn jeder erste Produktaufnahmeraum zum Transport des Packguts eine erste Länge und jeder zweite Produktaufnahmeraum zum Transport des mindestens einen Behältnisses eine zweite Länge, die größer als die erste Länge ist, aufweist. Damit wird den Größenverhältnissen von Packgut und Behältnissen Rechnung getragen.

Das Packgut wird vorzugsweise zunächst in dem mindestens einen ersten Produktaufnahmeraum zur Übertragungsposition transportiert, und nachdem das Packgut in den mindestens einen Zwischenablagebereich bewegt wurde, wird das Packgut in den mindestens einen zweiten Produktaufnahmeraum und somit in das mindestens eine Behältnis bewegt. Der Vorteil dieses Ablaufs besteht darin, dass das Packgut in das mindestens eine Behältnis eingebracht wird, während das mindestens eine Behältnis unbewegt ist. Nach dem Einbringen des Packguts in das mindestens eine Behältnis befindet sich das befüllte Behältnis bereits auf der Transportvorrichtung und kann unmittelbar weitertransportiert werden.

Bei einer speziellen Ausgestaltung ist jeder erste und zweite Produktaufnahmeraum zwischen zwei Halteelementen ausgebildet, so dass das Packgut und das mindestens eine Behältnis stabil in dem ersten und zweiten Produktaufnahmeraum angeordnet und mitgeführt werden können. Dadurch ist ein zuverlässiger Transport von Packgut und Behältnissen möglich.

Mit weiterem Vorteil werden die zwei Halteelemente jedes Produktaufnahmeraums durch die Wechselwirkung des mindestens einen Permanentmagneten mit der Linearmotor-Antriebsvorrichtung relativ zueinander verschoben. Folglich kann die Bewegung der Halteelemente zum Verändern der Länge des Produktaufnahmeraums effizient elektronisch gesteuert werden. Eine manuelle Einstellung der Abstände zwischen den Halteelementen ist nicht erforderlich.

Bei einer speziellen Ausgestaltung weist die Transportvorrichtung mindestens einen ersten, einen zweiten und einen dritten Schlitten auf, wobei das Halteelement des zweiten Schlittens sowohl zur Bildung des ersten als auch des zweiten Produktaufnahmeraums beiträgt. Auf diese Weise können das Packgut und die Behältnisse effektiv und mit hohem Durchsatz transportiert werden.

Bevorzugt werden der mindestens eine erste und der mindestens eine zweite Produktaufnahmeraum in Gruppen transportiert. Dies erhöht den Durchsatz des Verfahrens.

Weiter bevorzugt ist es, wenn mehrere erste und mehrere zweite Produktaufnahmeräume in jeder Gruppe von Produktaufnahmeräumen vorgesehen sind, wobei sich jeweils erste Produktaufnahmeräume und zweite Produktaufnahmeräume in Förderrichtung abwechseln. Somit ist es möglich, in jedem Übergabezyklus an bestimmten Übertragungspositionen Packgut in die Zwischenablagebereiche zu befördern und gleichzeitig an anderen Übertragungspositionen Packgut von den Zwischenablagebereichen in die Behältnisse zu befördern.

In diesem Fall ist es auch bevorzugt, wenn die Anzahl von ersten Produktaufnahmeräumen und die Anzahl von zweiten Produktaufnahmeräumen in jeder Gruppe gerade sind. Auf diese Weise kann die Ansteuerung der Schlitten bis zu den Übertragungspositionen bei jedem Umlauf identisch sein, was den Steuerungsaufwand verringert.

Bevorzugt erfolgt das Bewegen des Packguts von der Transportvorrichtung zum mindestens einen Zwischenablagebereich durch Schieben des Packguts in einer ersten Richtung quer zur Förderrichtung. Zudem ist es bevorzugt, dass das Befüllen des mindestens einen Behältnisses mit Packgut durch Einschieben des Packguts in das mindestens eine Behältnis in einer zweiten, zur ersten Richtung entgegengesetzten Richtung erfolgt. Bei dem Bewegen des Packguts zum Zwischenablagebereich durch Schieben und bei dem Befüllen des mindestens einen Behältnisses mit Packgut durch Einschieben kann die Übertragung des Packguts auf direktem Wege und mit geringem konstruktivem Aufwand erfolgen. Dadurch beschleunigt sich der Gesamtprozess.

Weitere Eigenschaften und Vorteile der vorliegenden Erfindung ergeben sich aus der nachfolgenden Beschreibung unter Bezugnahme auf die Zeichnungen.
- Fig. 1: ist eine schematische Seitenansicht einer Transportvorrichtung, wie sie bei dem erfindungsgemäßen Verfahren zur Anwendung kommen kann;
- Fig. 2: ist eine perspektivische Ansicht eines Abschnitts in Fig. 1, die den generellen Aufbau der Transportvorrichtung zeigt;
- Fig. 3A-D: sind schematische Ansichten von oben einer Transportvorrichtung, in denen vier Phasen eines Ausführungsbeispiels des erfindungsgemäßen Verfahrens dargestellt sind;
- Fig. 4A-D: sind schematische Ansichten von oben einer Transportvorrichtung, in denen vier Phasen eines weiteren Ausführungsbeispiels des erfindungsgemäßen Verfahrens dargestellt sind;
- Fig. 5A-D: sind schematische Ansichten von oben einer Transportvorrichtung, in denen vier Phasen eines weiteren Ausführungsbeispiels des erfindungsgemäßen Verfahrens dargestellt sind; und
- Fig. 6A-B: sind perspektivische Ansichten eines Abschnitts einer Transportvorrichtung, in denen zwei Phasen eines weiteren Ausführungsbeispiels des erfindungsgemäßen Verfahrens dargestellt sind.

Das erfindungsgemäße Verfahren zur Übertragung von Packgut in Behältnisse und zum Weitertransport der befüllten Behältnisse wird nachfolgend anhand der Zeichnungen näher beschrieben. In den Figuren ist das Packgut 2 in Form von Blisterpackungen oder Blisterpackungsstapeln dargestellt. Weiterhin sind die Behältnisse 4 in Form von Faltschachteln dargestellt. Es ist jedoch klar, dass das Packgut 2 und die Behältnisse 4 nicht auf diese konkreten Gestaltungen beschränkt sind.

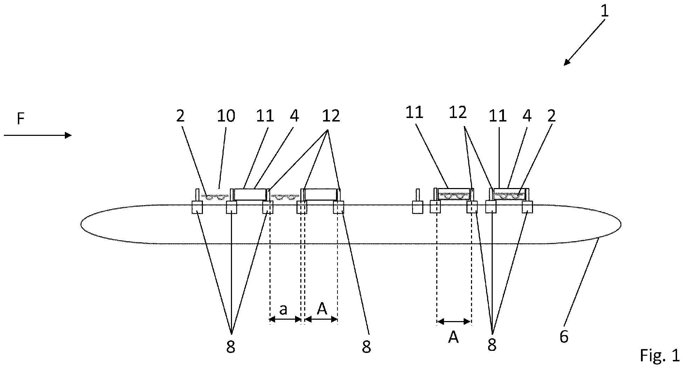

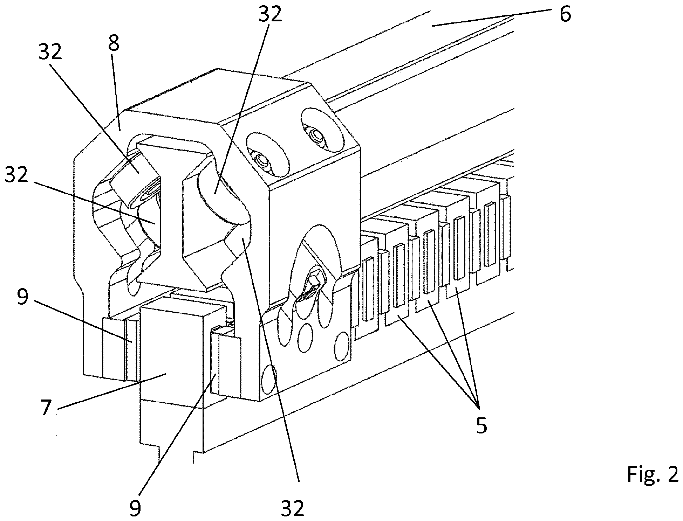

Fig. 1 zeigt in einer Seitenansicht den Aufbau einer Transportvorrichtung 1, die bei der Durchführung des erfindungsgemäßen Verfahrens zum Einsatz kommen kann. Fig. 2 zeigt den grundsätzlichen Aufbau der Transportvorrichtung 1. Die Transportvorrichtung 1 umfasst eine ortsfeste, insbesondere umlaufend angeordnete Laufschiene 6 zur Führung von mindestens zwei bewegbaren Schlitten 8, vorzugsweise mehr als zwei unabhängig voneinander bewegbaren Schlitten 8. Wenngleich im dargestellten Beispielsfall der Fig. 1 zehn Schlitten 8 gezeigt sind, können auch weniger oder mehr Schlitten gleichzeitig an der Laufschiene 6 angeordnet sein.

Zum Antrieb der Schlitten 8 dient eine Linearmotor-Antriebsvorrichtung 7, die eine Mehrzahl von aneinandergereihten Spulen 5 umfasst, die einzeln bestromt werden können. Jeder Schlitten 8 weist wiederum wenigstens einen, vorzugsweise zwei Permanentmagnete 9 auf, die mit der Linearmotor-Antriebsvorrichtung 7 in Wirkverbindung stehen. Dementsprechend kann jeder Schlitten 8 individuell entlang der Laufschiene 6 in Bewegung versetzt werden. Die Lagerung und Führung der Schlitten 8 entlang der Laufschiene 6 erfolgt, wie Fig. 2 zeigt, über eine Mehrzahl von Laufrollen 32. Für die konstruktive Ausgestaltung der Schlitten 8 und deren Lagerung an der Laufschiene 6 existiert eine große Anzahl von Möglichkeiten.

Die Förderrichtung F des Packguts 2 in der Transportvorrichtung 1 ist vorzugsweise geradlinig, wie in Fig. 1 mit dem Pfeil dargestellt. Die Förderrichtung F des Packguts 2 kann aber auch veränderlich sein, d.h. es können auch Kurvenbahnen durchlaufen werden. Ebenso kann die Förderrichtung F entgegengesetzt zur Förderrichtung in Fig. 1 sein.

Im Beispiel der Fig. 1 hat die umlaufende Laufschiene 6 die Form eines langgestreckten, liegenden Ovals. Die Schlitten 8 bewegen sich um die gesamte Laufschiene 6 herum, bis sie wieder die Ausgangsposition erreicht haben. Der längere geradlinige obere Abschnitt der Laufschiene 6 erstreckt sich in Förderrichtung F und bildet den Teil der Transportvorrichtung 1, in dem Packgut 2 und Behältnisse 4 befördert werden.

Die Schlitten 8 sind in Fig. 1 an dem oberen Abschnitt der Laufschiene 6 in Förderrichtung F hintereinander angeordnet. Die linken fünf Schlitten 8 und die rechten fünf Schlitten 8 sind jeweils zu zwei Gruppen von Schlitten 8 zusammengefasst. Der linken Gruppe von Schlitten 8 sind jeweils zwei erste Produktaufnahmeräume 10 zugeordnet, in denen Packgut 2 transportiert werden kann. Beiden Gruppen von Schlitten 8 sind außerdem zwei zweite Produktaufnahmeräume 11 zugeordnet, in denen jeweils ein leeres Behältnis 4 bzw. ein mit Packgut 2 befülltes Behältnis 4 transportiert werden kann. Die ersten und zweiten Produktaufnahmeräume 10, 11 sind abwechselnd entlang der Laufschiene 6 angeordnet.

Jeder erste und zweite Produktaufnahmeraum 10, 11 wird in der Regel von zwei Halteelementen 12 begrenzt, einem in Förderrichtung F vorderen Halteelement 12 und einem in Förderrichtung F hinteren Halteelement 12. Im Falle der Fig. 1 werden pro Gruppe von Schlitten 8 die vier Produktaufnahmeräume 10, 11 jeweils durch fünf Halteelemente 12 begrenzt, wobei jeweils zwei benachbarte Halteelemente 12 einen Produktaufnahmeraum 10, 11 begrenzen.

Bei dem Beispiel in Fig. 1 weist jeder Schlitten 8 genau ein Halteelement 12 auf, sodass ein Produktaufnahmeraum 10, 11 jeweils zwischen zwei Halteelementen 12 zweier benachbarter Schlitten 8 definiert ist.

Dabei werden alle Schlitten 8 einer Gruppe von Schlitten 8 beim Transport von Packgut 2 und Behältnissen 4 identisch bewegt, sodass das Packgut 2 oder das leere Behältnis 4 im ersten bzw. zweiten Produktaufnahmeraum 10, 11 gehalten und vorzugsweise leicht von den Halteelementen 12 beaufschlagt wird.

Die in Fig. 1 linke Gruppe von Schlitten 8 transportiert Packgut 2 in zwei Produktaufnahmeräumen 10 und ein leeres Behältnis 4 in zwei Produktaufnahmeräumen 11. Die rechte Gruppe von Schlitten 8 transportiert in Fig. 1 jeweils zwei befüllte Behältnisse 4. Meist weist jeder erste Produktaufnahmeraum 10 bei Transport des Packguts 2 eine erste Länge a und jeder zweite Produktaufnahmeraum 11 bei Transport eines leeren oder befüllten Behältnisses 4 eine zweite Länge A, die größer als die erste Länge a ist, auf. In der Ausgestaltung von Fig. 1 bedeutet dies, dass die Schlitten 8 jeder Gruppe abwechselnd in einem engeren und einem weiteren Abstand zueinander verfahren werden.

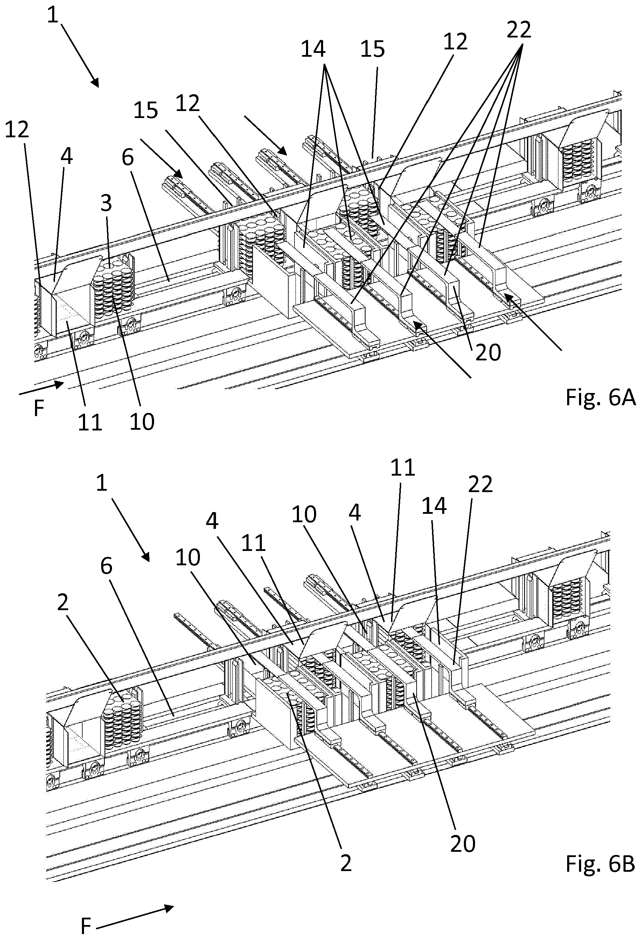

Die zwischenzeitlichen Schritte zur Befüllung von Behältnissen 4 mit dem Packgut 2 sind unten unter Bezugnahme auf Fig. 6A und 6B näher erläutert.

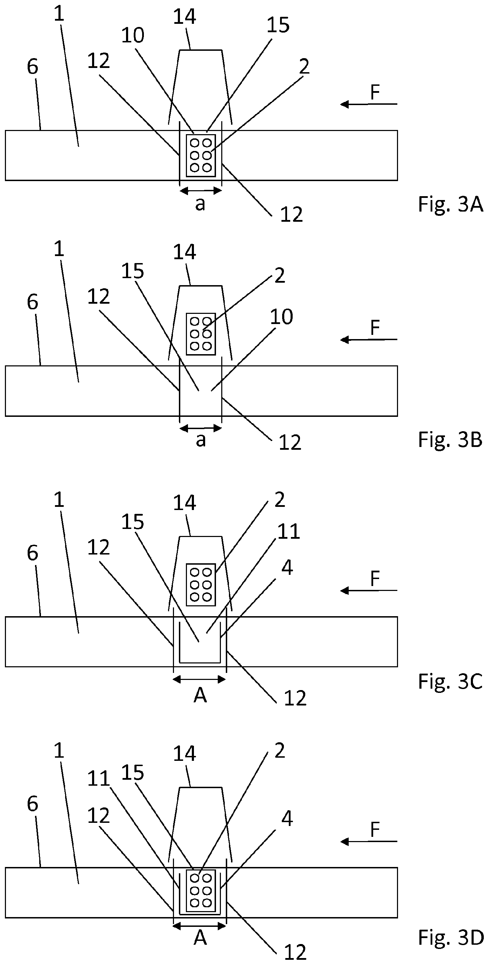

Im Folgenden werden die einzelnen Phasen der Ausführungsformen des erfindungsgemäßen Verfahrens anhand der Figuren 3 bis 6 näher erläutert.

Die Fig. 3A bis 3D sind jeweils schematische Ansichten von oben einer Transportvorrichtung 1 mit einer Laufschiene 6 und zwei Halteelementen 12, in denen vier Phasen eines Ausführungsbeispiels des erfindungsgemäßen Verfahrens dargestellt sind. Zum Zwecke der einfacheren Darstellung sind die Schlitten 8, welchen die Halteelemente 12 zugeordnet sind, nicht gezeigt. Außerdem ist in den Fig. 3A bis 3D ein Zwischenablagebereich 14 dargestellt, der neben einer Übertragungsposition 15 der Transportvorrichtung 1 angeordnet ist.

In der ersten Phase ist in der Übertragungsposition 15 ein erster Produktaufnahmeraum 10 angeordnet, der durch die beiden Halteelemente 12 begrenzt wird. Der erste Produktaufnahmeraum 10 ist mit Packgut 2 bestückt und in Richtung quer zur Förderrichtung F neben dem Zwischenablagebereich 14 angeordnet.

In der zweiten Phase in Fig. 3B wurde ausgehend von der Darstellung in Fig. 3A das Packgut 2 in Richtung quer zur Förderrichtung F in den Zwischenablagebereich 14 bewegt.

In der dritten Phase in Fig. 3C wurde ausgehend von Fig. 3B der erste, entleerte Produktaufnahmeraum 10 weiterbewegt. Außerdem wurde ein zweiter Produktaufnahmeraum 11, der durch zwei Halteelemente 12 begrenzt wird und mit einem leeren Behältnis 4 bestückt ist, mit der Transportvorrichtung 1 in Förderrichtung F zur Übertragungsposition 15 bewegt. Der zweite Produktaufnahmeraum 11 hat eine größere Länge A als die Länge a des ersten Produktaufnahmeraums 10. Die offene Seite des Behältnisses 4 ist dem Packgut 2 in dem Zwischenablagebereich 14 zugewandt.

In der vierten Phase in Fig. 3D wurde ausgehend von Fig. 3C das Packgut 2 von dem Zwischenablagebereich 14 in Richtung quer zur Förderrichtung F zurück zur Transportvorrichtung 1 bewegt und dabei das Behältnis 4 mit dem Packgut 2 befüllt. Ausgehend von Fig. 3D kann nun das befüllte Behältnis 4 durch die Transportvorrichtung 1 in Förderrichtung F weitertransportiert werden.

Bei den Halteelementen 12 in den Fig. 3A bis 3D handelt es sich in jedem Fall um zwei Paare von Halteelementen 12, wobei in den Fig. 3A und 3B ein erstes Paar von Halteelementen 12 den ersten Produktaufnahmeraum 10 definiert und in den Fig. 3C und 3D ein zweites Paar von Halteelementen 12 den zweiten Produktaufnahmeraum 11 definiert.

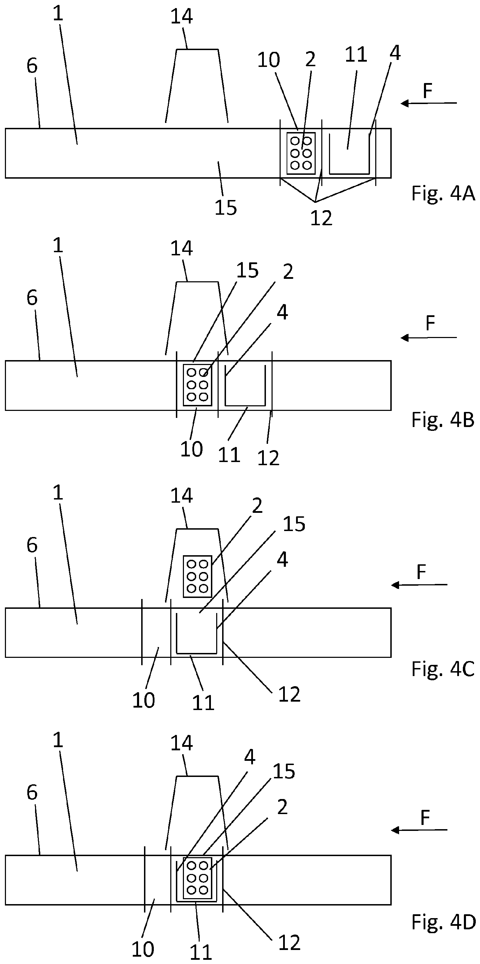

Fig. 4A bis 4D sind jeweils schematische Ansichten von oben einer Transportvorrichtung 1 mit einer Laufschiene 6 und Halteelementen 12, in denen vier Phasen eines weiteren Ausführungsbeispiels des erfindungsgemäßen Verfahrens dargestellt sind. Zum Zwecke der einfacheren Darstellung sind die Schlitten 8, welchen die Halteelemente 12 zugeordnet sind, nicht gezeigt. In den Fig. 4A bis 4D ist außerdem ein Zwischenablagebereich 14 dargestellt, der neben einer Übertragungsposition 15 der Transportvorrichtung 1 angeordnet ist.

In den Fig. 4A bis 4D sind ein erster und ein zweiter Produktaufnahmeraum 10, 11 gezeigt, die jeweils von zwei Halteelementen 12 aus einer Gruppe von drei Halteelementen 12 begrenzt sind. Der Gruppe von Halteelementen 12 ist ein erster Produktaufnahmeraum 10 zum Transport des Packguts 2 und ein zweiter Produktaufnahmeraum 11 zum Transport eines Behältnisses 4 zugeordnet. Der erste Produktaufnahmeraum 10 weist eine erste Länge a auf und der zweite Produktaufnahmeraum 11 weist eine zweite Länge A auf, die größer als die erste Länge ist.

In der ersten Phase in Fig. 4A wird in dem ersten Produktaufnahmeraum 10 ein Packgut 2 und in dem zweiten Produktaufnahmeraum 11 gleichzeitig ein leeres Behältnis 4 in Förderrichtung F der Transportvorrichtung 1 gefördert.

In der zweiten Phase in Fig. 4B wurde ausgehend von Fig. 4A der erste Produktaufnahmeraum 10 mit dem Packgut 2 in die Übertragungsposition 15 bewegt. Der in der Übertragungsposition 15 angeordnete Produktaufnahmeraum 10 ist in Richtung quer zur Förderrichtung F neben dem Zwischenablagebereich 14 angeordnet.

In Fig. 4C wurde ausgehend von Fig. 4B das Packgut 2 von dem ersten Produktaufnahmeraum 10 in einer ersten Richtung quer zur Förderrichtung F in den Zwischenablagebereich 14 bewegt. Darüber hinaus wurde der zweite Produktaufnahmeraum 11 mit dem leeren Behältnis 4 in die Übertragungsposition 15 bewegt. Der in der Übertragungsposition 15 angeordnete Produktaufnahmeraum 11 ist neben dem Zwischenablagebereich 14 angeordnet, wobei die offene Seite des Behältnisses 4 dem in dem Zwischenablagebereich 14 angeordneten Packgut 2 zugewandt ist.

In Fig. 4D wurde ausgehend von Fig. 4C das Packgut 2 von dem Zwischenablagebereich 14 zurück zur Transportvorrichtung 1 bewegt, in dem sich das Behältnis 4 befindet. Dabei wurde das Behältnis 4 mit dem Packgut 2 befüllt. In einer weiteren Phase kann das befüllte Behältnis 4 nun von der Transportvorrichtung 1 in Förderrichtung F weitertransportiert werden.

Der Unterschied zwischen der Ausführungsform der Fig. 4A-D im Vergleich zur Ausführungsform der Fig. 3A-D besteht somit darin, dass die Produktaufnahmeräume 10, 11 in Reihe angeordnet sind und die zugehörigen Schlitten 8 als Gruppe gemeinsam bewegt werden.

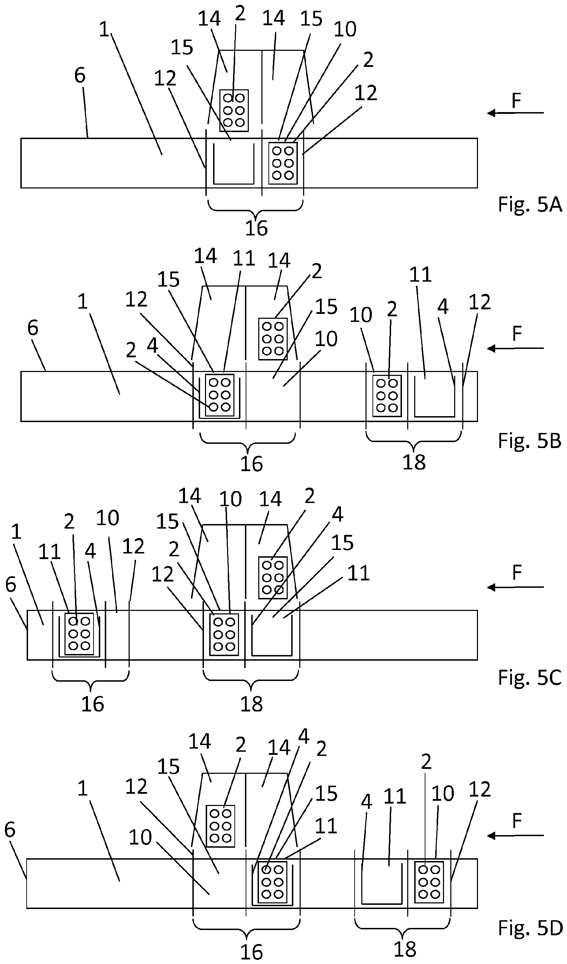

Fig. 5A bis 5D sind jeweils schematische Ansichten von oben einer Transportvorrichtung 1 mit einer Laufschiene 6 und Halteelementen 12, in denen vier Phasen eines weiteren Ausführungsbeispiels des erfindungsgemäßen Verfahrens dargestellt sind. Zum Zwecke der einfacheren Darstellung sind die Schlitten, denen die Halteelemente 12 zugeordnet sind, nicht gezeigt. Außerdem sind in den Fig. 5A bis 5D zwei Zwischenablagebereiche 14 in Förderrichtung F hintereinander angeordnet.

In den Fig. 5A bis 5D sind eine erste und eine zweite Gruppe 16, 18 von Produktaufnahmeräumen 10, 11 dargestellt, die jeweils aus drei Halteelementen 12 gebildet werden. Jeder Gruppe 16, 18 sind ein erster Produktaufnahmeraum 10 zum Transport des Packguts 2 und ein zweiter Produktaufnahmeraum 11 zum Transport eines Behältnisses 4 zugeordnet. Der erste Produktaufnahmeraum 10 weist eine erste Länge a auf und der zweite Produktaufnahmeraum 11 weist eine zweite Länge A auf, die größer als die erste Länge ist. In Fig. 5A ist der zweite Produktaufnahmeraum 11 der ersten Gruppe 16 in Förderrichtung F vor dem ersten Produktaufnahmeraum 10 angeordnet.

In der in Fig. 5A dargestellten ersten Phase ist in dem in Förderrichtung F vorderen Zwischenablagebereich 14 bereits aus einem früheren Übergabezyklus Packgut 2 angeordnet. Der zweite Produktaufnahmeraum 11 der ersten Gruppe 16 ist in einer Übertragungsposition 15 neben dem vorderen Zwischenablagebereich 14 angeordnet. In dem zweiten Produktaufnahmeraum 11 ist ein leeres Behältnis 4 angeordnet. Die offene Seite des Behältnisses 4 ist dem Packgut 2 in dem vorderen Zwischenablagebereich 14 zugewandt. Weiterhin ist ein mit Packgut 2 bestückter erster Produktaufnahmeraum 10 der ersten Gruppe 16 in einer weiteren Übertragungsposition 15 neben dem hinteren Zwischenablagebereich 14 angeordnet.

In der zweiten Phase in Fig. 5B wurde ausgehend von der Darstellung in Fig. 5A das Packgut 2 von dem vorderen Zwischenablagebereich 14 in einer zweiten Richtung quer zur Förderrichtung F in das Behältnis 4 in dem zweiten Produktaufnahmeraum 11 bewegt, und das Packgut 2 in dem ersten Produktaufnahmeraum 10 wurde in einer ersten Richtung quer zur Förderrichtung F, entgegengesetzt zur zweiten Richtung, in den hinteren Zwischenablagebereich 14 bewegt.

Wie in Fig. 5B weiterhin zu sehen, werden ein erster und ein zweiter Produktaufnahmeraum 10, 11 einer zweiten Gruppe 18 von der Transportvorrichtung 1 in Förderrichtung F heranbewegt. Der erste Produktaufnahmeraum 10 ist mit Packgut 2 bestückt und der zweite Produktaufnahmeraum 11 ist mit einem leeren Behältnis 4 bestückt. Der erste Produktaufnahmeraum 10 ist hier in Förderrichtung F vor dem zweiten Produktaufnahmeraum 11 angeordnet.

In Fig. 5C wurden ausgehend von Fig. 5B der erste und zweite Produktaufnahmeraum 10, 11 der ersten Gruppe 16 in Förderrichtung F weiterbewegt, um das in dem zweiten Produktaufnahmeraum 11 angeordnete befüllte Behältnis 4 weiter zu transportieren. Zusätzlich wurden der erste und zweite Produktaufnahmeraum 10, 11 der zweiten Gruppe 18 in Förderrichtung F weiterbewegt und in den Übertragungspositionen 15 neben dem vorderen und dem hinteren Zwischenablagebereich 14 angeordnet. Das leere Behältnis 4 in dem zweiten Produktaufnahmeraum 11 ist neben dem Packgut 2 in dem hinteren Zwischenablagebereich 14 angeordnet.

In Fig. 5D wurde ausgehend von Fig. 5C das Packgut 2 von dem hinteren Zwischenablagebereich 14 in der zweiten Richtung quer zur Förderrichtung F in das Behältnis 4 in dem zweiten Produktaufnahmeraum 11 bewegt. Außerdem wurde das Packgut 2 von dem ersten Produktaufnahmeraum 10 in der ersten Richtung quer zur Förderrichtung F, entgegengesetzt zur zweiten Richtung, in den vorderen Zwischenablagebereich 14 bewegt. Außerdem werden wiederum ein erster und zweiter Produktaufnahmeraum 10, 11 einer weiteren Gruppe in Förderrichtung F heranbewegt. Die weitere Gruppe kann wieder die erste Gruppe 16 oder eine zusätzliche Gruppe sein. In jedem Fall ist die Reihenfolge der Produktaufnahmeräume 10, 11 der weiteren Gruppe wie bei der ersten Gruppe 16. Die Anzahl der Gruppen ist grundsätzlich beliebig wählbar.

In einer weiteren, nicht gezeigten Phase können der erste und zweite Produktaufnahmeraum 10, 11 der zweiten Gruppe 18 in Förderrichtung F weiterbewegt und der erste und zweite Produktaufnahmeraum 10, 11 der weiteren Gruppe in Förderrichtung F bis zu den Übertragungspositionen 15 bewegt werden, so dass sich wieder die Darstellung in Fig. 5A ergibt. Damit ist ein Übertragungszyklus beendet.

Fig. 6A und 6B sind jeweils perspektivische Ansichten eines Abschnitts einer Transportvorrichtung 1 entsprechend der Transportvorrichtung 1 aus Fig. 1 und einer Übertragungsvorrichtung 20 zum Übertragen von Packgut 2, in denen zwei Phasen eines weiteren Ausführungsbeispiels des erfindungsgemäßen Verfahrens dargestellt sind.

Das Ausführungsbeispiel in den Fig. 6A und 6B ist vom Verfahrensprinzip her identisch mit dem in Bezug auf die Fig. 5A bis 5D beschriebenen Ausführungsbeispiel. Die Phasen des Verfahrens in den Fig. 6A und 6B entsprechen dabei den Phasen des Verfahrens in den Fig. 5A und 5B. In Fig. 6A und 6B bestehen die erste und die zweite Gruppe 16, 18 aus jeweils vier Produktaufnahmeräumen 10, 11, d.h. zwei erste Produktaufnahmeräume 10 zur Aufnahme von Packgut 2 und zwei zweite Produktaufnahmeräume 11 zur Aufnahme von Behältnissen 4. Die ersten und zweiten Produktaufnahmeräume 10, 11 sind in Förderrichtung F abwechselnd hintereinander angeordnet.

In Fig. 6A sind die ersten und zweiten Produktaufnahmeräume 10, 11 der ersten Gruppe 16 in den Übertragungspositionen 15 neben den Zwischenablagebereichen 14 angeordnet. Die ersten und zweiten Produktaufnahmeräume 10, 11 der ersten Gruppe 16 sind mit zwei leeren Behältnissen 4 und zwei Blisterpackungsstapeln 3 bestückt. In den Zwischenablagebereichen 14 sind bereits zwei Blisterpackungsstapel 3 angeordnet.

Wie in Fig. 6A und 6B weiterhin zu sehen ist, sind die vier Zwischenablagebereiche 14 in Förderrichtung F hintereinander angeordnet. Neben den Blisterpackungsstapeln 3 in den Zwischenablagebereichen 14 sind in Richtung quer zur Förderrichtung F die leeren Behältnisse 4 auf der Transportvorrichtung 1 angeordnet, wobei die offenen Seiten der Behältnisse 4 den Blisterpackungsstapeln 3 in den Zwischenablagebereichen 14 zugewandt sind. Eine Übertragungsvorrichtung 20, die insgesamt vier Verschiebeelemente 22 umfasst, sorgt für das Querverschieben der Blisterpackungsstapel 3 in beiden entgegengesetzten Richtungen quer zur Förderrichtung F.

In Fig. 6B wurden die beiden Blisterpackungsstapel 3 von den Zwischenablagebereichen 14 durch zwei Verschiebeelemente 22 in einer zweiten Richtung quer zur Förderrichtung F auf die Transportvorrichtung 1 und dort in die Behältnisse 4 verschoben. Darüber hinaus wurden die beiden Blisterpackungsstapel 3 von den ersten Produktaufnahmeräumen 10 durch zwei andere Verschiebeelemente 22 in einer ersten Richtung, entgegengesetzt zur zweiten Richtung, zu zwei Zwischenablagebereichen 14 verschoben.

In einer weiteren Phase können die Produktaufnahmeräume 10, 11 der ersten Gruppe 16 und damit die mit Packgut 2 befüllten und in den zweiten Produktaufnahmeräumen 11 aufgenommenen zwei Behältnisse 4 in Förderrichtung F weiterbewegt werden. Hierbei kann der nun leere Zwischenraum zwischen zwei befüllten Produktaufnahmeräumen 11 reduziert werden, falls dies für die weitere Bearbeitung sinnvoll ist. Anschließend können weitere Produktaufnahmeräume 10, 11 einer zweiten Gruppe 18 in die Übertragungspositionen 15 nachrücken.

Bei den Ausführungsformen der Fig. 5A bis 5D und Fig. 6A bis 5B ist die Anzahl von Produktaufnahmeräumen 10, 11 einer Gruppe 16, 18 beliebig wählbar. Allerdings ist es vorteilhaft, wenn sich erste Produktaufnahmeräume 10 mit zweiten Produktaufnahmeräumen 11 abwechseln und die Produktaufnahmeräume 10, 11 der aufeinanderfolgenden Gruppen 16, 18 jeweils in umgekehrter Reihenfolge angeordnet sind.

Besonders bevorzugt ist außerdem eine gerade Gesamtzahl von Produktaufnahmeräumen 10, 11 pro Gruppe 16, 18, was auch eine gerade Anzahl von Übertragungspositionen 15 und Zwischenablagebereichen 14 mit sich bringt. Auf diese Weise können in jeder Gruppe 16, 18 von Produktaufnahmeräumen 10, 11 jeweils dieselbe Anzahl von befüllten Behältnissen 4 erzeugt werden.

Selbstverständlich ist es aber auch möglich, in einer ersten Gruppe 16 nur erste Produktaufnahmeräume 10 vorzusehen und in einer zweiten Gruppe 18 nur zweite Produktaufnahmeräume 11.

In den Fig. 6A und 6B umfasst die Übertragungsvorrichtung 20 insgesamt vier Verschiebeelemente 22 zum Querverschieben der Blisterpackungsstapel 3 in den Richtungen quer zur Förderrichtung F. Dabei sind die vier Verschiebeelemente 22 in der Lage, das Packgut 2 in beiden Richtungen quer zur Förderrichtung F zu verschieben. Es können jedoch auch acht getrennte Verschiebeelemente 22 in Form von Schiebeplatten vorgesehen sein, wobei jeweils vier Schiebeplatten auf der Seite der Transportvorrichtung 1 und vier Schiebeplatten auf der Seite der Zwischenablagebereiche 14 vorgesehen sind.

Bei den in den Fig. 1 und 6 gezeigten Ausgestaltungen ist jedem Schlitten 8 ein Halteelement 12 zugeordnet. Das Packgut 2 oder die Behältnisse 4 werden in dem Produktaufnahmeraum 10, 11 zwischen den Halteelementen 12 eines Paares oder einer Gruppe von Schlitten 8 gehalten und transportiert. Grundsätzlich können n Schlitten 8 in Reihe miteinander n-1 Produktaufnahmeräume definieren, wenn Halteelemente 12 bestimmter Schlitten 8 jeweils beidseitig genutzt werden. Bei einer weiteren Ausgestaltung, die nicht in den Figuren gezeigt ist, können jedem Schlitten 8 auch mindestens drei Halteelemente zugeordnet sein, d.h. jeder Schlitten 8 beinhaltet für sich alleine mindestens zwei Produktaufnahmeräume 10, 11 und/oder kann noch mit anderen Schlitten 8 zur Bildung von Produktaufnahmeräumen 10, 11 zusammenwirken.

Ein Schlitten 8 kann auch für sich alleine einen Produktaufnahmeraum 10, 11 aufweisen. In diesem Fall wären bei der Ausführungsform aus Fig. 3A bis 3D beispielsweise nur zwei anstelle von vier Schlitten 8 notwendig.

Die Halteelemente 12 weisen in jedem Fall eine vertikale Erstreckung auf. Sie können beispielsweise i-förmig ausgebildet sein. In diesem Fall liegen das Packgut 2 oder das Behältnis 4 vorzugsweise auf Auflageflächen an den Schlitten 8 auf und werden von den Halteelementen 12 lediglich seitlich gestützt. Ebenso können die Halteelemente 12 auch L-förmig oder umgekehrt T-förmig ausgebildet sein, wobei Schenkel der L-Form oder T-Form dann auch als Auflageflächen des Produktaufnahmeraumes 10, 11 dienen. Schließlich können die Halteelemente 12 auch innere Anlageflächen aufweisen, die gekrümmte Abschnitte aufweisen. Ein Halteelement 12 kann nur auf einer Seite zum Halten eines Gegenstands verwendet werden oder auf beiden Seiten. Insofern kann ein Halteelement 12 auch zur Bildung von zwei Produktaufnahmeräumen 10 verwendet werden.

Das bislang beschriebene erfindungsgemäße Grundschema lässt sich in vielen Punkten beliebig modifizieren. So können in allen Ausführungsformen mehrere Produktaufnahmeräume 10, 11 gleichzeitig befüllt, geleert und/oder transportiert werden. Dementsprechend können auch mehrere Übertragungspositionen 15 und Zwischenablagebereiche 14 vorliegen. Insbesondere in den in Fig. 5 und Fig. 6 beschriebenen Ausgestaltungen ist dies zur Erhöhung des Durchsatzes sinnvoll. Die Anzahl von Produktaufnahmeräumen 10, 11 und Schlitten 8 ist grundsätzlich variabel und an den Anwendungsfall anzupassen.

Neben einer Schiebebewegung könnten das Packgut 2 und die Behältnisse 4 auch von der Transportvorrichtung 1 zum Zwischenablagebereich 14 und zurück gehoben oder anderweitig bewegt werden. Die Schiebebewegung hat aber den Vorteil der einfachen Gestaltung. Außerdem können durch die Schiebebewegungen auch Beipackzettel (nicht dargestellt), die auf bekannte Weise herantransportiert wurden, zusammen mit dem Packgut 2 in die Behältnisse 4 eingeschoben werden.

Die Länge der Produktaufnahmeräume 10, 11 in Förderrichtung F, d.h. der Abstand zwischen jeweils zwei Halteelementen 12, ist grundsätzlich auf die jeweiligen Anwendungszwecke einstellbar. Unterschiedliche Produkte verlangen unterschiedlich lange Produktaufnahmeräume 10, 11. Außerdem sind in der Regel die Produktaufnahmeräume 11 für Behältnisse 4 etwas länger auszugestalten als die Produktaufnahmeräume 10 für Packgut 2. Schließlich kann es zur Erleichterung des Einfügens von Packgut 2 oder Behältnissen 4 in Produktaufnahmeräume 10, 11 sinnvoll sein, diese Produktaufnahmeräume 10, 11 zunächst etwas länger zu gestalten, um sie nach dem erfolgten Einfügen des Packguts 2 oder der Behältnisse 4 wieder in ihrer Länge zu beschränken. Die Relativbewegung der Halteelemente 12 zueinander erfolgt in der Regel durch gezielte Ansteuerung der Schlitten 8 mittels der Linearmotor-Antriebsvorrichtung 7.

Auf diese Weise wird ein höchst flexibles System geschaffen, das alle möglichen Einsatzbereiche abdeckt, ohne den Austausch von Formatteilen notwendig zu machen.

## Patentansprüche

1. Verfahren zum Übertragen von Packgut (2), insbesondere Blisterpackungen, in Behältnisse (4), insbesondere Faltschachteln, und zum Weitertransport der befüllten Behältnisse (4), mit folgenden Schritten:
Bereitstellen einer Transportvorrichtung (1) mit mindestens zwei Schlitten (8), einer Laufschiene (6), entlang der die mindestens zwei Schlitten (8) bewegbar sind, und einer Linearmotor-Antriebsvorrichtung (7) zum Antrieb der mindestens zwei Schlitten (8), wobei die mindestens zwei Schlitten (8) jeweils mindestens einen Permanentmagneten (9) aufweisen, der mit der Linearmotor-Antriebsvorrichtung (7) in Wirkverbindung steht,
Fördern von Packgut (2) mit der Transportvorrichtung (1) in einer Förderrichtung (F) zu mindestens einer Übertragungsposition (15),
Bewegen des Packguts (2) von der Transportvorrichtung (1) in mindestens einen Zwischenablagebereich (14), der neben der Transportvorrichtung (1) angeordnet ist,
Fördern von mindestens einem Behältnis (4) mit der Transportvorrichtung (1) in der Förderrichtung (F) zu der mindestens einen Übertragungsposition (15),
Zurückbewegen des Packguts (2) von dem mindestens einen Zwischenablagebereich (14) zur Transportvorrichtung (1), dabei Befüllen des mindestens einen Behältnisses (4) mit Packgut (2), und
Weitertransportieren des mit Packgut (2) befüllten mindestens einen Behältnisses (4) mit der Transportvorrichtung (1) in der Förderrichtung (F).

2. Verfahren nach Anspruch 1, **dadurch gekennzeichnet, dass** das Packgut (2) und das mindestens eine Behältnis (4) in mindestens einem ersten und einem zweiten Produktaufnahmeraum (10, 11) der Transportvorrichtung (1) transportiert werden.

3. Verfahren nach Anspruch 2, **dadurch gekennzeichnet, dass** der mindestens eine erste Produktaufnahmeraum (10) zum Transport des Packguts (2) eine erste Länge und der mindestens eine zweite Produktaufnahmeraum (11) zum Transport des mindestens einen Behältnisses (4) eine zweite Länge, die größer als die erste Länge ist, aufweist.

4. Verfahren nach Anspruch 3, **dadurch gekennzeichnet, dass** das Packgut (2) zunächst in dem mindestens einen ersten Produktaufnahmeraum (10) zur mindestens einen Übertragungsposition (15) transportiert wird, und nachdem das Packgut (2) in den mindestens einen Zwischenablagebereich (14) bewegt wurde, das Packgut (2) in den mindestens einen zweiten Produktaufnahmeraum (11) und somit in das mindestens eine Behältnis (4) bewegt wird.

5. Verfahren nach einem der Ansprüche 2 bis 4, **dadurch gekennzeichnet, dass** jeder Produktaufnahmeraum (10, 11) zwischen zwei Halteelementen (12) ausgebildet ist.

6. Verfahren nach Anspruch 5, **dadurch gekennzeichnet, dass** die zwei Halteelemente (12) jedes Produktaufnahmeraums (10, 11) durch die Wechselwirkung mindestens eines Permanentmagneten (9) mit der Linearmotor-Antriebsvorrichtung (7) relativ zueinander verschoben werden.

7. Verfahren nach Anspruch 5 oder 6, **dadurch gekennzeichnet, dass** die Transportvorrichtung (1) mindestens einen ersten, einen zweiten und einen dritten Schlitten (8) aufweist, an denen jeweils eines der Halteelemente (12) angeordnet ist, wobei das Halteelement (12) des zweiten Schlittens (8) sowohl zur Bildung des ersten als auch des zweiten Produktaufnahmeraums (10, 11) beiträgt.

8. Verfahren nach einem der Ansprüche 2 bis 7, **dadurch gekennzeichnet, dass** der mindestens eine erste und der mindestens eine zweite Produktaufnahmeraum (10, 11) in Gruppen (16, 18) transportiert werden.

9. Verfahren nach Anspruch 8, **dadurch gekennzeichnet, dass** mehrere erste und mehrere zweite Produktaufnahmeräume (10, 11) in jeder Gruppe (16, 18) von Produktaufnahmeräumen (10, 11) vorgesehen sind, wobei sich in jeder Gruppe (16, 18) jeweils erste Produktaufnahmeräume (10) und zweite Produktaufnahmeräume (11) in Förderrichtung (F) abwechseln.

10. Verfahren nach Anspruch 9, **dadurch gekennzeichnet, dass** die Anzahl von ersten Produktaufnahmeräumen (10) und die Anzahl von zweiten Produktaufnahmeräumen (11) in jeder Gruppe (16, 18) gerade sind.

11. Verfahren nach einem der vorhergehenden Ansprüche, **dadurch gekennzeichnet, dass** das Bewegen des Packguts (2) von der Transportvorrichtung (1) zum Zwischenablagebereich (14) durch Schieben des Packguts (2) in einer ersten Richtung quer zur Förderrichtung (F) erfolgt.

12. Verfahren nach Anspruch 11, **dadurch gekennzeichnet, dass** das Befüllen des mindestens einen Behältnisses (4) mit Packgut (2) durch Einschieben des Packguts (2) in das mindestens eine Behältnis (4) in einer zweiten, zur ersten Richtung entgegengesetzten Richtung erfolgt.

## Claims

1. Method by means of which articles which are to be packaged (2), in particular blister packs, are transferred into containers (4), in particular folding boxes, and the filled containers (4) are transported onwards, having the following steps:
supplying a transporting apparatus (1) which has at least two carriages (8), a running rail (6), along which the at least two carriages (8) can be moved, and a linear-motor drive device (7) for driving the at least two carriages (8), wherein the at least two carriages (8) each have at least one permanent magnet (9), which is in operative connection with the linear-motor drive device (7),
conveying articles (2) by way of the transporting apparatus (1) in a conveying direction (F) to at least one transfer position (15),
moving the articles (2) from the transporting apparatus (1) into at least one interim set-down region (14), which is arranged alongside the transporting apparatus (1),
conveying at least one container (4) by way of the transporting apparatus (1) in the conveying direction (F) to the at least one transfer position (15),
moving the articles (2) back from the at least one interim set-down region (14) to the transporting apparatus (1), the at least one container (4) being filled with articles (2) in the process, and
transporting the at least one container (4), filled with articles (2), onwards in the conveying direction (F) by way of the transporting apparatus (1).

2. Method according to Claim 1, **characterized in that** the articles (2) and the at least one container (4) are transported in at least one first and one second product-accommodating space (10, 11) of the transporting apparatus (1).

3. Method according to Claim 2, **characterized in that** the at least one first product-accommodating space (10), for transporting the articles (2), has a first length and the at least one second product-accommodating space (11), for transporting the at least one container (4), has a second length, the second length being greater than the first length.

4. Method according to Claim 3, **characterized in that** the articles (2) in the first instance are transported in the at least one first product-accommodating space (10) to the at least one transfer position (15) and, once the articles (2) have been moved into the at least one interim set-down region (14), the articles (2) are moved into the at least one second product-accommodating space (11) and thus into the at least one container (4).

5. Method according to one of Claims 2 to 4, **characterized in that** each product-accommodating space (10, 11) is formed between two retaining elements (12).

6. Method according to Claim 5, **characterized in that** the two retaining elements (12) of each product-accommodating space (10, 11) are displaced relative to one another by the interaction of at least one permanent magnet (9) with the linear-motor drive device (7).

7. Method according to Claim 5 or 6, **characterized in that** the transporting apparatus (1) has at least one first, one second and one third carriage (8), in each case one of the retaining elements (12) being arranged thereon, wherein the retaining element (12) of the second carriage (8) helps to form both the first and the second product-accommodating spaces (10, 11).

8. Method according to one of Claims 2 to 7, **characterized in that** the at least one first and the at least one second product-accommodating space (10, 11) are transported in groups (16, 18).

9. Method according to Claim 8, **characterized in that** a plurality of first and a plurality of second product-accommodating spaces (10, 11) are provided in each group (16, 18) of product-accommodating spaces (10, 11), wherein, in each group (16, 18), first product-accommodating spaces (10) and second product-accommodating spaces (11) each alternate in the conveying direction (F).

10. Method according to Claim 9, **characterized in that** there is an even number of first product-accommodating spaces (10) and of second product-accommodating spaces (11) in each group (16, 18).

11. Method according to one of the preceding claims, **characterized in that** the operation of moving the articles (2) from the transporting apparatus (1) to the interim set-down region (14) takes place by virtue of the articles (2) being pushed in a first direction transverse to the conveying direction (F).

12. Method according to Claim 11, **characterized in that** the operation of filling the at least one container (4) with articles (2) takes place by virtue of the articles (2) being pushed into the at least one container (4) in a second direction, which is counter to the first direction.

## Revendications

1. Procédé pour la transmission de produit emballé (2), en particulier d'emballages à plaquette thermoformée, dans des récipients (4), en particulier des boîtes pliantes, et pour le transport ultérieur des récipients (4) remplis, avec les étapes suivantes :
mettre à disposition un dispositif de transport (1) avec au moins deux chariots (8), un rail de roulement (6), le long duquel les au moins deux chariots (8) sont mobiles, et un dispositif d'entraînement à moteur linéaire (7) pour l'entraînement des au moins deux chariots (8), dans lequel les au moins deux chariots (8) présentent respectivement au moins un aimant permanent (9) qui est en liaison active avec le dispositif d'entraînement à moteur linéaire (7),
transporter le produit emballé (2) avec le dispositif de transport (1) dans un sens de transport (F) dans au moins une position de transmission (15),
déplacer du produit emballé (2) par le dispositif de transport (1) dans au moins une zone de dépôt intermédiaire (14) qui est agencée à côté du dispositif de transport (1),
transporter au moins un récipient (4) avec le dispositif de transport (1) dans le sens de transport (F) dans l'au moins une position de transmission (15),
renvoyer du produit emballé (2) de l'au moins une zone de dépôt intermédiaire (14) vers le dispositif de transport (1), le remplissage en même temps de l'au moins un récipient (4) avec du produit emballé (2) et
transporter ultérieurement au moins un récipient (4) rempli de produit emballé (2) avec le dispositif de transport (1) dans le sens de transport (F).

2. Procédé selon la revendication 1, **caractérisé en ce que** le produit emballé (2) et l'au moins un récipient (4) sont transportés dans au moins un premier et un second espace de réception de produit (10, 11) du dispositif de transport (1).

3. Procédé selon la revendication 2, **caractérisé en ce que** l'au moins un premier espace de réception de produit (10) présente pour le transport du produit emballé (2) une première longueur et l'au moins un second espace de réception de produit (11) présente pour le transport de l'au moins un récipient (4) une seconde longueur qui est plus grande que la première longueur.

4. Procédé selon la revendication 3, **caractérisé en ce que** le produit emballé (2) est tout d'abord transporté dans l'au moins un premier espace de réception de produit (10) vers l'au moins une position de transmission (15), et après que le produit emballé (2) a été déplacé dans l'au moins une zone de dépôt intermédiaire (14), le produit emballé (2) est déplacé dans l'au moins un second espace de réception de produit (11) et ainsi dans l'au moins un récipient (4).

5. Procédé selon l'une des revendications 2 à 4, **caractérisé en ce que** chaque espace de réception de produit (10, 11) est réalisé entre deux éléments de retenue (12).

6. Procédé selon la revendication 5, **caractérisé en ce que** les deux éléments de retenue (12) de chaque espace de réception de produit (10, 11) sont déplacés l'un par rapport à l'autre par l'interaction au moins d'un aimant permanent (9) avec le dispositif d'entraînement à moteur linéaire (7).

7. Procédé selon la revendication 5 ou 6, **caractérisé en ce que** le dispositif de transport (1) présente au moins un premier, un deuxième et un troisième chariots (8), sur lesquels est disposé respectivement l'un des éléments de retenue (12), dans lequel l'élément de retenue (12) du deuxième chariot (8) contribue non seulement à la formation du premier mais aussi du deuxième espace de réception de produit (10, 11).

8. Procédé selon l'une des revendications 2 à 7, **caractérisé en ce que** l'au moins un premier et l'au moins un second espace de réception de produit (10, 11) sont transportés en groupes (16, 18).

9. Procédé selon la revendication 8, **caractérisé en ce que** plusieurs premiers et plusieurs deuxièmes espaces de réception de produit (10, 11) sont prévus dans chaque groupe (16, 18) d'espaces de réception de produit (10, 11), dans lequel dans chaque groupe (16, 18), respectivement des premiers espaces de réception de produit (10) et des seconds espaces de réception de produit (11) se succèdent dans le sens de transport (F).

10. Procédé selon la revendication 9, **caractérisé en ce que** le nombre de premiers espaces de réception de produit (10) et le nombre de deuxièmes espaces de réception de produit (11) sont pairs dans chaque groupe (16, 18).

11. Procédé selon l'une des revendications précédentes, **caractérisé en ce que** le déplacement du produit emballé (2) par le dispositif de transport (1) vers la zone de dépôt intermédiaire (14) est effectué par coulissement du produit emballé (2) dans un premier sens transversalement au sens de transport (F).

12. Procédé selon la revendication 11, **caractérisé en ce que** le remplissage de l'au moins un récipient (4) avec du produit emballé (2) est effectué par insertion du produit emballé (2) dans l'au moins un récipient (4) dans un second sens opposé au premier sens.
